(19) Europäisches Patentamt / European Patent Office / Office européen des brevets

(11) **EP 4 765 375 A1**

(12) **EUROPEAN PATENT APPLICATION**
published in accordance with Art. 153(4) EPC

(43) Date of publication:
**24.06.2026 Bulletin 2026/26**

(21) Application number: **25774787.3**

(22) Date of filing: **18.03.2025**

(51) International Patent Classification (IPC):
**H01M 50/131** (2021.01)  **H01M 50/126** (2021.01)
**H01M 50/105** (2021.01)  **H01M 50/133** (2021.01)
**H01M 50/124** (2021.01)  **H01M 50/121** (2021.01)
**H01M 50/119** (2021.01)  **H01M 50/136** (2021.01)
**H01M 50/145** (2021.01)

(52) Cooperative Patent Classification (CPC):
**H01M 50/105; H01M 50/119; H01M 50/121;
H01M 50/124; H01M 50/126; H01M 50/131;
H01M 50/133; H01M 50/136; H01M 50/145;
Y02E 60/10**

(86) International application number:
**PCT/KR2025/003530**

(87) International publication number:
**WO 2025/198315 (25.09.2025 Gazette 2025/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.03.2024  KR 20240037462
18.03.2024  KR 20240037463
24.12.2024  KR 20240196382
17.03.2025  KR 20250034242**

(71) Applicant: **LG Energy Solution, Ltd.
Seoul 07335 (KR)**

(72) Inventors:
• **LEE, Wan Soo
  Daejeon 34122 (KR)**
• **HWANG, Soo Ji
  Daejeon 34122 (KR)**
• **SHIN, Ji Hyun
  Daejeon 34122 (KR)**
• **YU, Hyung Kyun
  Daejeon 34122 (KR)**
• **SONG, Dae Woong
  Daejeon 34122 (KR)**
• **KIM, Gi Woung
  Daejeon 34122 (KR)**

(74) Representative: **Plasseraud IP
104 Rue de Richelieu
CS92104
75080 Paris Cedex 02 (FR)**

(54) **POUCH FILM LAMINATE, POUCH-TYPE BATTERY CASE, AND POUCH-TYPE SECONDARY BATTERY**

(57)  The present invention relates to a pouch film laminate including a base material layer, a gas barrier layer, and a sealant layer which are sequentially laminated, wherein the base material layer includes a surface protection layer, and the pouch film laminate has a Max Forming Index A ($MFI_A$) expressed by Equation 1 of 15 or more.

$$[Equation\ 1]$$

$$Max\ Forming\ Index\ A\ (MFI_A) = (PT/AT) \times TS$$

In Equation 1, PT is a value of a thickness ($\mu$m) of the surface protection layer, AT is a value of a thickness ($\mu$m) of the pouch film laminate, and TS is a value of tensile strength (N/15 mm) of the pouch film laminate.

**(Cont. next page)**

[FIG. 1]

100

112 } 110
114
120
130

## EP 4 765 375 A1

**Description**

## TECHNICAL FIELD

### Cross-reference to Related Applications

This application claims priority from Korean Patent Application Nos. 10-2024-0037462, filed on March 18, 2024, 10-2024-0037463, filed on March 18, 2024, 10-2024-0196382, filed on December 24, 2024, and 10-2025-0034242, filed on March 17, 2025, the disclosures of which are incorporated by reference herein.

### Technical Field

The present invention relates to a pouch film laminate, a pouch type battery case, and a pouch type secondary battery.

## BACKGROUND ART

Secondary batteries have been used in various fields, including not only small products such as digital cameras, P-DVDs, MP3Ps, mobile phones, PDAs, portable game devices, power tools, and E-bikes, but also large products requiring high output, such as electric vehicles and hybrid vehicles, and a power storage device and a power storage device for backup which store surplus generated power or renewable energy. Types of the secondary batteries include a nickel cadmium battery, a nickel hydride battery, a lithium ion battery, and a lithium ion polymer battery.

A secondary battery may be prepared by accommodating an electrode assembly, in which a positive electrode, a negative electrode, and a separator disposed therebetween are alternatingly stacked, in a battery case, injecting an electrolyte, and then sealing the battery case. The secondary batteries are classified into a pouch type, a can type, and the like, according to a material of a case for accommodating the electrode assembly.

A pouch, which is a case of a pouch type secondary battery, is prepared by press working of a flexible pouch film laminate to form a cup portion. Then, once the cup portion is formed, a secondary battery is prepared by accommodating the electrode assembly in an accommodation space of the cup portion and sealing a sealing portion.

Drawing in the press working is performed by inserting a pouch film laminate into press equipment and applying pressure to the pouch film laminate with a punch to stretch the pouch film laminate. In this case, the pouch film laminate is formed by sequentially laminating a plurality of layers such as a base material layer, a gas barrier layer, and a sealant layer.

Such a multilayer structure significantly affects safety, sealing properties, and formability of the secondary battery when the pouch film laminate is subsequently prepared into a pouch type secondary battery case, and particularly, has a significant impact on forming a depth of the cup portion deeper to achieve high energy density.

Conventional techniques have attempted to form the depth of the cup portion of the pouch type case deeply only by controlling thickness and physical properties of a nylon film that assists drawing or an aluminum alloy thin film used as a gas barrier layer, but, since a surface protection layer, a total thickness of the pouch film laminate, and physical properties of the pouch film laminate were not comprehensively considered, there were limitations in achieving excellent formability and robustness of the pouch type battery case.

Thus, the present invention aims to provide a pouch film laminate which may achieve better formability and robustness by considering not only thickness and physical properties of each layer included in the pouch film laminate, but also the total thickness and physical properties of the pouch film laminate and a thickness of the surface protection layer.

## DISCLOSURE OF THE INVENTION

### TECHNICAL PROBLEM

An aspect of the present invention provides a pouch film laminate, a pouch type battery case, and a pouch type secondary battery which have excellent formability and robustness by controlling $MFI_A$ (Max Forming Index A), a parameter defined by a thickness of a surface protection layer, a thickness of the pouch film laminate, and tensile strength of the pouch film laminate, within a specific range.

The object of the present invention is not limited to the aforesaid, but other objects not described herein will be clearly understood by those skilled in the art from descriptions below.

### TECHNICAL SOLUTION

[1] The present invention provides a pouch film laminate including a base material layer, a gas barrier layer, and a sealant layer which are sequentially laminated, wherein the base material layer includes a surface protection layer, and the pouch film laminate has a Max Forming Index A ($MFI_A$) expressed by Equation 1 of 15 or more.

$$\text{[Equation 1]}$$

$$\text{Max Forming Index } (MFI_A) = (PT/AT) \times TS$$

In Equation 1, PT is a value of a thickness ($\mu$m) of the surface protection layer, AT is a value of a thickness ($\mu$m) of the pouch film laminate, and TS is a value of tensile strength (N/15 mm) of the pouch film laminate.

[2] In the pouch film laminate of [1] above, the surface protection layer may have the thickness of 10 $\mu$m to 35 $\mu$m.

[3] In the pouch film laminate of [1] or [2] above, the base material layer further includes a drawing assistance layer, and the drawing assistance layer may have a thickness of 20 $\mu$m to 45 $\mu$m.

[4] In the pouch film laminate of at least one of [1] to [3] above, the base material layer may have a thickness of 45 $\mu$m to 70 $\mu$m.

[5] In the pouch film laminate of at least one of [1] to [4] above, the gas barrier layer may have a thickness of 70 $\mu$m to 90 $\mu$m.

[6] In the pouch film laminate of at least one of [1] to [5] above, the sealant layer may have a thickness of 70 $\mu$m to 90 $\mu$m.

[7] In the pouch film laminate of at least one of [1] to [6] above, the sealant layer may include a first sealant layer disposed to be in contact with the gas barrier layer, a second sealant layer laminated on the first sealant layer, and a third sealant layer laminated on the second sealant layer.

[8] In the pouch film laminate of at least one of [1] to [7] above, the pouch film laminate may have the thickness of 120 $\mu$m to 300 $\mu$m.

[9] In the pouch film laminate of at least one of [1] to [8] above, the pouch film laminate may have an elongation of 60% to 120%.

[10] In the pouch film laminate of at least one of [1] to [9] above, the pouch film laminate may have the tensile strength of 225 N/15 mm to 350 N/15 mm.

[11] In the pouch film laminate of at least one of [1] to [9] above, the base material layer further includes a drawing assistance layer, and the pouch film laminate may have a Max Forming Index B ($MFI_B$) expressed by Equation 2 of 45 or more.

$$\text{[Equation 2]}$$

$$\text{Max Forming Index } (MFI_A) = \{(PT+NT)/(AT)\} \times TS$$

In Equation 1, PT is the value of the thickness ($\mu$m) of the surface protection layer, NT is a value of a thickness ($\mu$m) of the drawing assistance layer, AT is the value of the thickness ($\mu$m) of the pouch film laminate, and TS is the value of the tensile strength (N/15 mm) of the pouch film laminate.

[12] In the pouch film laminate of at least one of [1] to [11] above, a ratio of the thickness of the pouch film laminate to the thickness of the surface protection layer may be in a range of 5 to 10.

[13] In the pouch film laminate of at least one of [1] to [12] above, a ratio of a thickness of the gas barrier layer to the thickness of the surface protection layer may be in a range of 2.5 to 3.3.

[14] In the pouch film laminate of at least one of [1] to [13] above, a ratio of a thickness of the gas barrier layer to a thickness of the base material layer is in a range of 1.4 to 1.8.

[15] In the pouch film laminate of at least one of [1] to [14] above, the base material layer further includes a drawing assistance layer, and a ratio of a thickness of the drawing assistance layer to the thickness of the surface protection layer is 1.2 or less.

[16] The present invention provides a pouch type battery case which is prepared by drawing the pouch film laminate of at least one of [1] to [16] above.

[17] The present invention provides a pouch type secondary battery including the pouch type battery case of [16] above.

**ADVANTAGEOUS EFFECTS**

Since a pouch film laminate according to the present invention controls Max Forming Index A ($MFI_A$), a parameter defined by a thickness of a surface protection layer, a thickness of the pouch film laminate, and tensile strength of the pouch film laminate, within a specific range, pinholes are not generated during forming of a cup portion while a maximum cup portion forming depth is increased and robustness is excellent. Accordingly, due to excellent strength of the pouch film laminate, the pouch film laminate may more effectively protect an electrode assembly inside even if it is subjected to high pressure from the outside or damaged by a sharp object, and energy efficiency to volume of a secondary battery may be increased by increasing the cup portion forming depth.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a cross-sectional view of a pouch film laminate according to the present invention.
FIG. 2 is an exploded assembly view of a pouch type secondary battery according to the present invention.
FIG. 3 is a schematic view for explaining edges and corner of a pouch type battery case according to the present invention.
FIG. 4 is a view illustrating a cutting position of the pouch type battery case for evaluating robustness in Experimental Example 2.
FIG. 5 is a view illustrating an example of a sample cut in Experimental Example 2.
FIG. 6 is a view illustrating an example of a cross section of the sample cut in Experimental Example 2.

## MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

In this specification, MD (Machine Direction) means a longitudinal direction of a pouch film laminate, and TD (Transverse Direction) means a width direction of the pouch film laminate.

As a result of continuous research on a pouch film laminate which may achieve excellent robustness while achieving an excellent forming depth without defects such as fracture or pinholes, the present inventors have found that in a case in which Max Forming Index A ($MFI_A$), a parameter defined by a thickness of a surface protection layer, a thickness of the pouch film laminate, and tensile strength of the pouch film laminate, is controlled within a specific range, a pouch film laminate, in which a maximum cup portion forming depth is increased while the defects, such as fracture or pinholes, are not generated during forming of a cup portion and robustness is improved, may be achieved, thereby leading to the completion of the present invention.

Hereinafter, the present invention will be described in detail.

A pouch film laminate according to the present invention includes at least one of configurations disclosed below, and may include any combination between technically possible configurations among the configurations below.

## Pouch Film Laminate 100

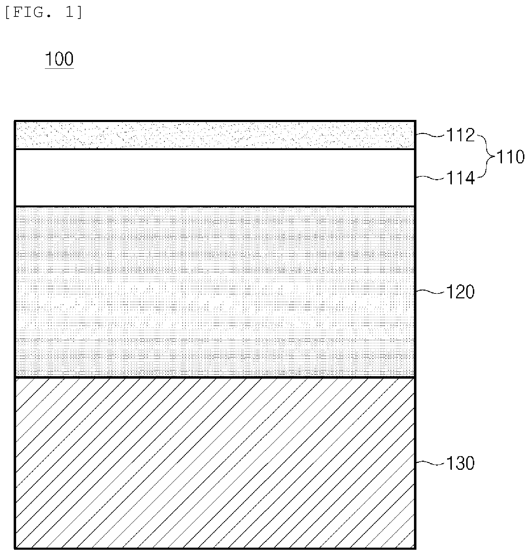

FIG. 1 is a cross-sectional view of a pouch film laminate 100 according to the present invention. Hereinafter, each configuration of the pouch film laminate 100 of the present invention will be described in more detail with reference to FIG. 1.

Referring to FIG. 1, the pouch film laminate 100 according to the present invention includes a base material layer 110, a gas barrier layer 120, and a sealant layer 130 which are sequentially laminated, wherein the base material layer 110 includes a surface protection layer 112, and the pouch film laminate 100 has a Max Forming Index A (MFI$_A$) expressed by Equation 1 below of 15 or more.

$$[\text{Equation 1}]$$

$$\text{Max Forming Index (MFI}_A) = (\text{PT/AT}) \times \text{TS}$$

In Equation 1, PT is a value of a thickness ($\mu$m) of the surface protection layer, AT is a value of a thickness ($\mu$m) of the pouch film laminate, and TS is a value of tensile strength (N/15 mm) of the pouch film laminate.

A pouch forming depth is affected by an edge curvature radius (edge R) of a forming die used during forming of a pouch and a forming amount of the pouch, and in this case, the pouch forming amount is affected by slip amount and elongation amount of the pouch during forming of the pouch film laminate. Particularly, since the edge curvature radius is a factor that is determined in battery design and is difficult to control, there is a need to effectively increase the forming amount of the pouch in order to improve the pouch forming depth regardless of this.

Specifically, the slip amount of the pouch, which affects the forming amount of the pouch, means a length of the pouch film laminate that slides out from a grip gap fixing the pouch film laminate when the pouch film laminate is pressed with the forming die, the elongation amount of the pouch, which affects the forming amount of the pouch, means a total amount by which the pouch film laminate is elongated when the pouch film laminate is pressed with the forming die, and the pouch forming depth tends to increase as the forming amount of the pouch, which is affected by the slip amount and the elongation amount of the pouch, is improved.

In this case, the slip amount and elongation amount of the pouch or the forming amount of the pouch are affected by thickness and physical properties, such as tensile strength, of the pouch film laminate, and thickness, composition, and physical properties of each component included in the pouch film laminate, but are specifically affected by the thickness and tensile strength of the pouch film laminate and a thickness of the surface protection layer. In this case, in a case in which the thickness of the surface protection layer relative to the thickness of the pouch film laminate is excessively low, or the tensile strength of the pouch film laminate is excessively low, local damage may occur as stress is locally concentrated during forming, and since the surface protection layer does not provide sufficient stiffness, the pouch film laminate may be locally elongated during forming or wrinkles may occur.

That is, in order to increase a cup portion forming depth as much as possible during the forming of the pouch and simultaneously maintain a residual amount of the gas barrier layer within an appropriate range after the forming of the pouch without causing defects such as fracture or pinholes, an appropriate combination of the tensile strength and thickness of the pouch film laminate and the thickness of the surface protection layer included in the pouch film laminate is required.

Thus, the pouch film laminate according to the present invention aims to achieve excellent robustness by increasing a thickness of the gas barrier layer at a corner portion formed during the forming of the pouch type battery case while achieving an excellent cup portion forming depth by controlling Max Forming Index A (MFI$_A$), a parameter defined by the thickness and tensile strength of the pouch film laminate and the thickness of the surface protection layer, within a specific range.

The pouch film laminate 100 has a Max Forming Index A (MFI$_A$) expressed by Equation 1 below of 15 or more.

$$[\text{Equation 1}]$$

$$\text{Max Forming Index A (MFI}_A) = (\text{PT/AT}) \times \text{TS}$$

In Equation 1, PT is a value of the thickness ($\mu$m) of the surface protection layer, AT is a value of the thickness ($\mu$m) of the pouch film laminate, and TS is a value of the tensile strength (N/15 mm) of the pouch film laminate.

Preferably, the pouch film laminate 100 may have the Max Forming Index A (MFI$_A$) expressed by Equation 1 of 15 or more, 18 or more, 20 or more, 22 or more, 24 or more, 26 or more, 27 or more, 28 or more, 29 or more, 30 or more, or 30.2 or more, and 70 or less, 65 or less, 60 or less, 55 or less, 50 or less, 45 or less, 40 or less, 39 or less, 38 or less, 37 or less, 36 or less, 35 or less, or 34 or less, more preferably, 30.2 to 34.

The Max Forming Index A (MFI$_A$) is a product of a ratio of the thickness of the surface protection layer to the thickness of the pouch film laminate and the tensile strength of the pouch film laminate. In a case in which the Max Forming Index A (MFI$_A$) is less than 15, since the ratio of the thickness of the surface protection layer to the total thickness of the pouch film laminate is excessively low or the tensile strength of the pouch film laminate is excessively low, a problem occurs during the forming of the pouch.

For example, in a case in which the ratio of the thickness of the surface protection layer to the total thickness of the pouch film laminate is excessively low, since stress may be locally concentrated during the forming of the pouch to cause local damage and the surface protection layer does not provide sufficient stiffness to cause local elongation or wrinkles during the forming of the pouch film laminate, there is a problem in that occurrence of defects, such as fracture or pinholes, during the forming of the pouch is increased and a maximum forming depth is low.

In a case in which the tensile strength of the pouch film laminate is excessively low, since the ratio of the thickness of the surface protection layer to the total thickness of the pouch film laminate and the tensile strength of the pouch film laminate are not organically combined to exhibit low stiffness, fracture or pinholes may occur in the pouch film laminate due to pressure of the forming die. Also, if the tensile strength of the pouch film laminate is excessively low, an excessive slip amount of the pouch may cause a problem of occurrence of fracture or pinholes in the pouch film laminate, and, since elongation may be excessive even at low forming pressure, the problem of the occurrence of fracture or pinholes may occur.

Accordingly, in a case in which the Max Forming Index A ($MFI_A$) expressed by Equation 1 satisfies the above-described range, since the ratio of the thickness of the surface protection layer to the total thickness of the pouch film laminate and the tensile strength of the pouch film laminate are appropriately combined, the occurrence of local elongation or wrinkles may be prevented while reducing the occurrence of local damage or pinholes, and thus, the cup portion forming depth and robustness of the pouch may be sufficiently increased during forming. Also, since the thickness of the gas barrier layer at the corner portion, which is a vulnerable portion of the pouch type battery case, may be appropriately maintained while the forming depth is excellent, it is desirable in that the robustness is excellent and the occurrence of wrinkles during the forming of the pouch may be suppressed.

Hereinafter, each configuration will be described in more detail.

**(1) Base Material Layer 110**

The base material layer 110 is formed as an outermost layer of the pouch film laminate 100 to protect a secondary battery from friction and collision with the outside. The base material layer 110 is formed of a polymer such that it may electrically insulate an electrode assembly from the outside.

According to an embodiment of the present invention, the base material layer 110 may have a composite layer structure which is formed by layering two or more materials, respectively. An adhesive layer may be additionally formed between the respective layers in the composite layer structure. Also, an adhesive layer may be additionally formed between the base material layer 110 and a gas barrier layer 120 to be described later, and the base material layer 110 may include an adhesive layer that adheres the gas barrier layer 120 and the base material layer 110.

According to an embodiment of the present invention, the base material layer 110 may include a surface protection layer 112, may preferably further include a drawing assistance layer 114, and may more preferably further include the surface protection layer 112 and the drawing assistance layer 114. In a case in which the above conditions are satisfied, it is desirable in that external insulation properties are excellent, a side reaction due to external moisture may be prevented, and formability of the pouch film laminate may be improved.

In this case, the surface protection layer 112 may be a layer disposed as the outermost layer of the pouch film laminate, and the drawing assistance layer 114 may be a layer disposed between the surface protection layer 112 and the gas barrier layer 120 to be described later. The surface protection layer 112 and the drawing assistance layer 114 may be formed of materials with different materials and/or physical properties, respectively. An interface may exist between the surface protection layer 112 and the drawing assistance layer 114. This means that the surface protection layer 112 and the drawing assistance layer 114 are different layers from each other, and may be formed separately.

Hereinafter, the surface protection layer 112 and the drawing assistance layer 114 will be described in detail.

**1) Surface Protection Layer 112**

The surface protection layer 112 may be a layer disposed as the outermost layer of the pouch film laminate as described above. In this case, the surface protection layer 112 may play a role in preventing moisture penetration from the outside of the pouch.

According to an embodiment of the present invention, the surface protection layer 112 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the surface protection layer 112 may include a polyester-based film having wear resistance and heat resistance. For example, the surface protection layer 112 may include at least one selected from the group consisting of polyethylene terephthalate, polybutylene terephthalate, and polyethylene naphthalate, but is not limited thereto.

If necessary, the surface protection layer 112 may include an additive. Physical properties of the surface protection layer 112 may be changed by including the additive in the surface protection layer 112. For example, as an additive to adjust tensile strength of the surface protection layer 112, at least one of carbon fibers, glass fibers, and aramid fibers may be added. In a case in which the above-described additive is included in the surface protection layer, an effect of increasing mechanical strength and further improving elongation may be obtained.

According to an embodiment of the present invention, the surface protection layer 112 may have a thickness of 10 $\mu$m to 35 $\mu$m, preferably 20 $\mu$m to 30 $\mu$m, more preferably 22 $\mu$m to 28 $\mu$m, and even more preferably 24 $\mu$m to 26 $\mu$m. In a case in which the above range is satisfied, since mechanical properties, such as tensile strength and elongation, of the surface protection layer 112 are excellent when each layer in the pouch film laminate 100 is stretched by forming of the pouch film laminate 100, the surface protection layer 112 may behave similarly to the drawing assistance layer 114, the gas barrier layer 120 and/or the sealant layer 130 which are described later, and thus, excellent formability may be achieved, problems, such as film tearing or wrinkling during forming, may be prevented because durability is enhanced in a structure that requires deep forming under pressure, and it may be desirable in that the Max Forming Index A (MFI$_A$) according to Equation 1 may be appropriately adjusted within the above-described range while the ratio of the thickness of the surface protection layer 112 to the total thickness of the pouch film laminate 100 may be appropriately controlled.

**2) Drawing Assistance Layer 114**

According to an embodiment of the present invention, the base material layer 110 may further include the drawing assistance layer 114. The drawing assistance layer 114 may be a layer disposed between the surface protection layer 112 and the gas barrier layer 120 as described above. In this case, since the drawing assistance layer 114 may mitigate a difference in stretching properties between the surface protection layer 112 and the gas barrier layer 120 by having stretching properties similar to those of the gas barrier layer 120, it may play a role in improving formability of the pouch.

According to an embodiment of the present invention, the drawing assistance layer 114 may include a polyamide-based film. For example, the drawing assistance layer 114 may include at least one selected from the group consisting of Nylon 6,6, Nylon MXD6(polyxylylene adipamide), Nylon 4, Nylon 4,6, and Nylon 4,10, but is not limited thereto.

According to an embodiment of the present invention, the drawing assistance layer 114 may have a thickness of 20 $\mu$m to 45 $\mu$m, preferably 20 $\mu$m to 30 $\mu$m, more preferably 22 $\mu$m to 28 $\mu$m, and even more preferably 24 $\mu$m to 26 $\mu$m. In a case in which the thickness of the drawing assistance layer 114 satisfies the above numerical range, since mechanical properties of the drawing assistance layer may be similar to those of the gas barrier layer, a deeper forming depth may be achieved during the forming of the pouch film laminate.

According to an embodiment of the present invention, the drawing assistance layer 114 may include metal oxide particles. The metal oxide particles may remove moisture in the drawing assistance layer 114 by being hydroxylated through a reaction with the moisture introduced into the drawing assistance layer 114. The metal oxide particles may include at least one selected from the group consisting of CaO, MnO, SrO, MgO, and ZnO. Preferably, the metal oxide particles may include at least one of CaO and MgO which are advantageous for hydroxylation with water.

According to an embodiment of the present invention, the drawing assistance layer 114 may further include an additive. Physical properties of the drawing assistance layer 114 may be changed by including the additive in the drawing assistance layer 114. For example, as an additive to adjust tensile strength of the drawing assistance layer 114, at least one of carbon fibers, glass fibers, and aramid fibers may be added.

According to an embodiment of the present invention, the base material layer 110 may have a composite layer structure which is formed by layering two or more materials, respectively. An adhesive layer may be additionally formed between the respective layers in the composite layer structure. The adhesive layer may be formed by applying an adhesive commonly used in the present invention, for example, a urethane-based adhesive. For example, in a case in which the base material layer 110 includes the surface protection layer 112 and/or the drawing assistance layer 114, an adhesive layer disposed between the surface protection layer 112 and the drawing assistance layer 114 may be additionally formed, and an adhesive layer disposed between the base material layer 110 and the gas barrier layer 120 may be additionally formed. In this case, the adhesive layer may have a thickness of 1 $\mu$m to 8 $\mu$m, preferably 1 $\mu$m to 5 $\mu$m, and more preferably 2 $\mu$m to 4 $\mu$m.

The base material layer 110 may have a thickness of 45 $\mu$m to 70 $\mu$m, preferably 45 $\mu$m to 60 $\mu$m, and more preferably 45 $\mu$m to 58 $\mu$m. In a case in which the thickness of the base material layer 110 satisfies the above range, external insulation properties are excellent, and since a total thickness of the pouch is not thick while excellent formability may be achieved by preventing damage to the base material layer during forming, volumetric energy density of the secondary battery may be excellent. In this case, the thickness of the base material layer 110 may be a thickness including the adhesive layer that may be included in the base material layer 110, and may be a thickness including the adhesive layer that adheres the gas barrier layer 120 and the base material layer 110. When the thickness of the base material layer 100 is a thickness including the adhesive layer in the base material layer 100 and the adhesive layer that adheres the gas barrier layer 120 and the base material layer 110 as described above, a clearer effect may be achieved.

**(2) Gas Barrier Layer 120**

The gas barrier layer 120 is laminated between the base material layer 110 and the sealant layer 130 to secure mechanical strength of the pouch, block incoming and outgoing of gas or moisture from the outside of the secondary battery, and prevent leakage of an electrolyte from the inside of the pouch type battery case.

According to an embodiment of the present invention, the gas barrier layer 120 may have a thickness of 70 $\mu$m to 90 $\mu$m, preferably 75 $\mu$m to 85 $\mu$m, and more preferably 78 $\mu$m to 82 $\mu$m. In a case in which the above range is satisfied, because formability of the gas barrier layer is improved, the cup portion may be formed deep when the pouch film laminate is drawn, an outer wall of the cup portion may be close to vertical, and a radius of curvature of an edge of the cup portion may also be reduced. Accordingly, since a volume of an accommodation portion is increased, more electrodes may be stacked in the electrode assembly accommodated therein and energy efficiency to volume may be increased. In addition, the total thickness of the pouch may not be significantly increased without decreasing a thickness of the sealant layer while not significantly increasing manufacturing costs, and sealing durability may not be reduced. Also, the residual amount of the gas barrier layer after the forming of the pouch may be appropriate to improve the robustness of the pouch. Furthermore, in a case in which the above range is satisfied, it may be desirable in that the Max Forming Index A ($MFI_A$) according to Equation 1 may be appropriately adjusted within the above-described range while the thickness of the surface protection layer 112 and the total thickness of the pouch film laminate 100 may be appropriately controlled.

According to an embodiment of the present invention, the gas barrier layer 120 may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 120 may be formed of an aluminum alloy thin film. In a case in which the gas barrier layer 120 is formed by using the aluminum alloy thin film, the gas barrier layer 120 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

In another example, the gas barrier layer 120 may be formed of a stainless steel thin film. Specifically, the gas barrier layer 120 may be prepared by forming and/or processing the stainless steel thin film. Since the gas barrier layer 120 formed of stainless steel has relatively low thermal conductivity, it is effective in preventing or delaying heat diffusion to other cells during thermal runaway, and, since it has relatively high toughness, it may suppress generation of cracks in the pouch during use of a pouch type battery. An element other than iron (Fe), for example, at least one selected from the group consisting of copper (Cu), chromium (Cr), manganese (Mn), nickel (Ni), magnesium (Mg), silicon (Si), and zinc (Zn) may be included in the stainless steel.

**(3) Sealant Layer**

The sealant layer 130 is for completely sealing the inside of the pouch type battery case by being thermally bonded to each other at a sealing portion when the pouch type battery case accommodating the electrode assembly inside is sealed. For this purpose, the sealant layer 130 may be formed of a material having excellent thermal bonding strength.

According to an embodiment of the present invention, the sealant layer 130 may be formed of a material having insulation properties, corrosion resistance, and sealing properties. Preferably, since the sealant layer 130 is in direct contact with the electrode assembly and/or the electrolyte inside the pouch type battery case, it may be formed of a material having insulation properties and corrosion resistance. Also, since the sealant layer 130 completely seals the inside of the pouch type battery case to block material movement between the inside/the outside, it may be formed of a material having high sealing properties (e.g., excellent thermal bonding strength). To ensure such insulation properties, corrosion resistance, and sealing properties, the sealant layer 130 may be formed of a polymer material.

According to an embodiment of the present invention, the sealant layer 130 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers, and may preferably be formed of a polyolefin-based resin such as polypropylene (PP) and/or polyethylene (PE). In this case, the polypropylene may be composed of cast polypropylene (CPP), acid modified polypropylene (PPa), a polypropylene-ethylene copolymer, and/or a polypropylene-butylene-ethylene terpolymer.

According to an embodiment of the present invention, the sealant layer 130 may have a thickness of 70 $\mu$m to 90 $\mu$m, preferably 75 $\mu$m to 85 $\mu$m, and more preferably 78 $\mu$m to 82 $\mu$m. In a case in which the thickness of the sealant layer satisfies the above range, there is an effect of securing formability of the pouch film laminate while securing sealing strength of the sealing portion.

According to an embodiment of the present invention, the sealant layer 130 may include a first sealant layer disposed to be in contact with the gas barrier layer 120, a second sealant layer laminated on the first sealant layer, and a third sealant layer laminated on the second sealant layer.

According to an embodiment of the present invention, the first sealant layer may include polypropylene, and preferably, in order to ensure long-term adhesion between the gas barrier layer and the first sealant layer, the first sealant layer may be formed of acid modified polypropylene (PPa). Herein, the acid modified polypropylene may be maleic anhydride polypropylene (MAH PP).

According to an embodiment of the present invention, the second sealant layer may be formed of a material having insulation properties, corrosion resistance, and sealing properties. Preferably, the second sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the second sealant layer may be formed of a polyolefin-based resin such as polypropylene (PP) and/or polyethylene (PE). In this case, the polypropylene may be composed of cast polypropylene, acid modified polypropylene, a polypropylene-ethylene copolymer, and/or a polypropylene-butylene-ethylene terpolymer. Herein, the acid modified polypropylene may be maleic anhydride polypropylene (MAH PP). More preferably, the second sealant layer may include cast polypropylene (CPP) having high tensile strength as well as heat sealability.

According to an embodiment of the present invention, the third sealant layer may include polypropylene, may preferably include a polypropylene random copolymer, may more preferably include at least one selected from the group consisting of an ethylene-propylene random copolymer and a butene-propylene random copolymer, and may even more preferably include an ethylene-propylene random copolymer. In a case in which the above conditions are satisfied, since a melt flow rate (MFR) is high and a melting point is low, a desired sealing thickness may be quickly achieved when the same amount of heat is applied. Accordingly, since sealing time may be reduced in comparison to a case where a polypropylene homocopolymer is included even if sealing temperature is not increased and processing time of the secondary battery may be reduced, productivity and processability may be improved, and simultaneously, since the third sealant layer has high thermal bonding strength, the pouch type battery case may have excellent sealing properties.

According to an embodiment of the present invention, the pouch film laminate 100 may have a thickness of 120 $\mu$m to 300 $\mu$m, preferably 160 $\mu$m to 250 $\mu$m, and more preferably 200 $\mu$m to 230 $\mu$m. When the thickness of the pouch film laminate satisfies the above range, a forming depth may be increased while minimizing a reduction of sealing durability or a decrease in battery accommodation space due to an increase in the thickness of the pouch laminate. Also, in a case in which the above range is satisfied, it may be desirable in that the Max Forming Index A ($MFI_A$) according to Equation 1 may be appropriately adjusted within the above-described range.

According to an embodiment of the present invention, the pouch film laminate 100 may have an elongation of 65% to 120%, preferably 70% to 110%, and more preferably 75% to 100%. In a case in which the above range is satisfied, since elongation of the pouch, which is caused while slippage is prevented due to friction between the pouch film laminate and the forming die, is not low, the cup portion forming depth may be excellent and the robustness may be improved.

According to an embodiment of the present invention, tensile strength of the pouch film laminate 100 may be in a range of 225 N/15 mm to 350 N/15 mm, may preferably be 225 N/15 mm or more, 230 N/15 mm or more, 235 N/15 mm or more, 240 N/15 mm or more, or 245 N/15 mm or more, and 350 N/15 mm or less, 330 N/15 mm or less, 310 N/15 mm or less, or 290 N/15 mm or less, and may more preferably be in a range of 245 N/15 mm to 290 N/15 mm. In a case in which the above range is satisfied, since a pouch slip amount corresponding to stress applied to the pouch during the forming of the pouch may increase, fracture or pinholes may not occur during the forming of the pouch and the cup portion forming depth may be improved. Also, since the tensile strength of the pouch film laminate is not excessively high, the pouch slip amount is appropriate, and thus, the occurrence of wrinkles may be suppressed during the forming of the pouch and the processability may be excellent because there is no excessive difference in length of the pouch film laminate before and after the forming of the pouch.

The above-described tensile strength and elongation may be measured by a conventional method, but may specifically be measured using a universal testing machine (UTM). More specifically, after a sample was prepared by cutting the pouch film laminate to have a length (machine direction (MD)) x width (transverse direction (TD)) of 120 mm x 15 mm, the sample was cut such that a longitudinal direction of the sample matched the MD of the pouch film laminate, fixed to the UTM with a grip gap of 50 mm, and then pulled at a tensile speed of 5 mm/min to measure strength at which fracture occurred as the tensile strength (N/15 mm), and in this case, the elongation may be measured by measuring a deformation length when the fracture occurred.

According to an embodiment of the present invention, the base material layer 110 further includes the drawing assistance layer 114, and the pouch film laminate 100 may have a Max Forming Index B ($MFI_B$) expressed by Equation 2 below of 45 or more.

[Equation 2]

$$\text{Max Forming Index (MFI}_A) = \{(PT+NT)/(AT)\} \times TS$$

In Equation 1, PT is a value of the thickness (μm) of the surface protection layer, NT is a value of the thickness (μm) of the drawing assistance layer, AT is a value of the thickness (μm) of the pouch film laminate, and TS is a value of the tensile strength (N/15 mm) of the pouch film laminate.

Preferably, the Max Forming Index B (MFI$_B$) expressed by Equation 2 may be 45 or more, 46 or more, 47 or more, 48 or more, 50 or more, 51 or more, 52 or more, 53 or more, 54 or more, 55 or more, 56 or more, 57 or more, 58 or more, 59 or more, 60 or more, 60.1 or more, 60.2 or more, or 60.3 or more, and 100 or less, 95 or less, 90 or less, 85 or less, 80 or less, 75 or less, 70 or less, 69 or less, 68 or less, or 67.0 or less, and may more preferably be in a range of 60.3 to 67.0. Equation 2 is a product of a ratio of a sum of the thicknesses of the surface protection layer and the drawing assistance layer to the thickness of the pouch film laminate and the tensile strength of the pouch film laminate. In addition to the Max Forming Index A (MFI$_A$) according to Equation 1 described above, the Max Forming Index B (MFI$_B$) is a parameter that considers the drawing assistance layer affecting the formability, wherein it may be a parameter suitable for achieving better formability. In a case in which the above range is satisfied, it may be desirable in that a better maximum forming depth may be achieved.

According to an embodiment of the present invention, a ratio of the thickness of the pouch film laminate 100 to the thickness of the surface protection layer 112 may be in a range of 5 to 10, preferably 6 to 9, and more preferably 8 to 9. In a case in which the above range is satisfied, since tensile deformation does not easily occur due to the relatively thick surface protection layer, a phenomenon of occurrence of wrinkles during a forming process may be prevented, and accordingly, the forming depth may be increased.

According to an embodiment of the present invention, a ratio of the thickness of the gas barrier layer 120 to the thickness of the surface protection layer 112 may be in a range of 2.5 to 3.3, preferably 2.7 to 3.3, and more preferably 3.0 to 3.3. In a case in which the above range is satisfied, since the thicknesses of the surface protection layer and the gas barrier layer are balanced, a tensile force is uniformly distributed during the forming process to facilitate deformation, and thus, an excellent forming depth may be ensured.

According to an embodiment of the present invention, a ratio of the thickness of the gas barrier layer 120 to the thickness of the base material layer 110 may be in a range of 1.4 to 1.8, preferably, 1.4 to 1.7. In a case in which the above range is satisfied, since cracks are prevented during forming, a high forming depth may be ensured.

According to an embodiment of the present invention, the base material layer 110 further includes the drawing assistance layer 114, and a ratio of the thickness of the drawing assistance layer 114 to the thickness of the surface protection layer 112 may be 1.2 or less, may preferably be 1.2 or less, 1.1 or less, or 1.05 or less, and 0.5 or more, 0.6 or more, 0.7 or more, 0.8 or more, or 0.9 or more, and may more preferably be in a range of 0.9 to 1.05. In a case in which the above range is satisfied, the film is uniformly stretched because stress is not concentrated in a specific portion due to uniform distribution of tensile stress, and, since the formability is improved because delamination does not occur due to uniform adhesion between the two films, a high forming depth may be ensured.

## Pouch Type Secondary Battery 200

Next, a pouch type secondary battery 200 according to the present invention will be described.

The pouch type secondary battery 200 according to the present invention includes a pouch type battery case 210 prepared by drawing the above-described pouch film laminate 100 and an electrode assembly 260 accommodated in the pouch type battery case 210. Preferably, the pouch type secondary battery 200 according to the present invention includes the pouch type battery case 210 in which the electrode assembly 260 is accommodated, the pouch type battery case 210 is prepared by drawing the pouch film laminate 100, and the pouch film laminate 100 includes the base material layer 110 including the surface protection layer 112, the gas barrier layer 120, and the sealant layer 130 which are sequentially laminated, wherein the pouch film laminate 100 may have the Max Forming Index A (MFI$_A$) expressed by Equation 1 of 15 or more.

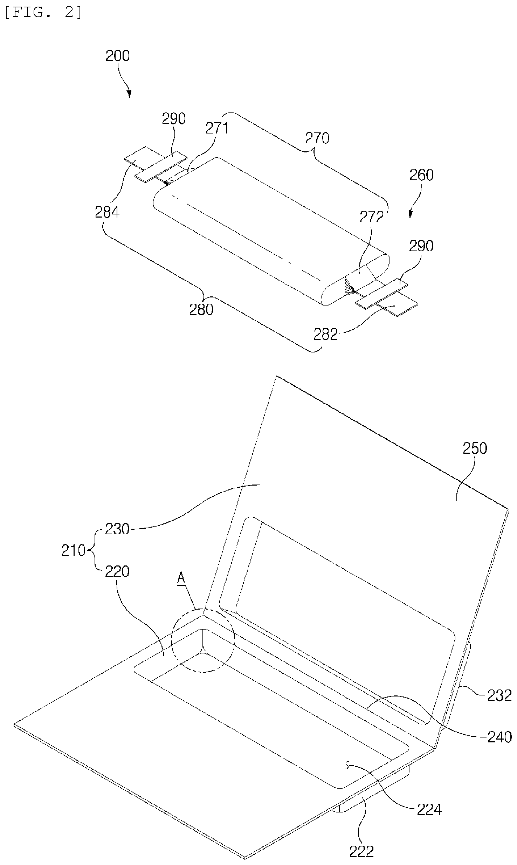

Hereinafter, each configuration of the pouch type secondary battery of the present invention will be described in more detail with reference to FIG. 2.

FIG. 2 is an exploded assembly view of the pouch type secondary battery 200 according to the present invention. As illustrated in FIG. 2, the pouch type secondary battery 200 of the present invention may include the pouch type battery case 210, the electrode assembly 260, an electrode lead 280, an insulating portion 290, and an electrolyte (not shown).

## (1) Pouch Type Battery Case

The pouch type battery case 210 may be prepared by drawing the above-described pouch film laminate of the present invention. The pouch type battery case 210 may accommodate the electrode assembly 260 inside. Since detailed configuration and physical properties of the pouch film laminate are the same as described above, a detailed description is omitted.

The pouch film laminate may be drawn and stretched by a punch or the like to prepare the pouch type battery case 210. As a result, the pouch type battery case 210 may include a cup portion 222 and an accommodation portion 224. The accommodation portion 224 is a place to accommodate the electrode assembly, wherein it may mean an accommodation space which is formed in a pocket shape inside the cup portion 222 as the cup portion 222 is formed.

According to an embodiment of the present invention, the pouch type battery case 210 may include a first case 220 and a second case 230 as illustrated in FIG. 2. The first case 220 includes the accommodation portion 224 capable of accommodating the electrode assembly 260, and the second case 230 may cover the accommodation portion 224 from the top so that the electrode assembly 260 is not separated to the outside of the battery case 210. The first case 220 and the second case 230 may be prepared by connecting one sides thereof to each other as illustrated in FIG. 2, but the present invention is not limited thereto and the first case 220 and the second case 230 may be prepared in various ways, for example, the first case 220 and the second case 230 are separated from each other and prepared separately.

According to another embodiment of the present invention, in a case in which the cup portion is formed on the pouch film laminate, two symmetrical cup portions 222 and 232 may be drawn adjacent to each other on one pouch film laminate. In this case, as illustrated in FIG. 2, the cup portions 222 and 232 may be formed in the first case 220 and the second case 230, respectively. After the electrode assembly 260 is accommodated in the accommodation portion 224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200 may be improved, and the number of sealing processes may be reduced.

The pouch type battery case 210 may be sealed in a state in which it accommodates the electrode assembly 260 so that a portion of an electrode lead 280 to be described later, that is, a terminal portion, is exposed. Specifically, when the electrode lead 280 is connected to an electrode tab 270 of the electrode assembly 260 and the insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion 250 formed on edges of the first case 220 and the second case 230 may be sealed.

The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

The pouch type battery case 210 according to the present invention may include the cup portions 222 and 232 having a recessed shape and a terrace portion 250 located on at least a portion of a circumference of the cup portions 222 and 232.

The cup portions 222 and 232 have the accommodation portion 224 for accommodating the electrode assembly 260, and the terrace portion 250 refers to an unformed portion of the pouch film laminate 100, that is, a remaining region excluding the cup portions 222 and 232.

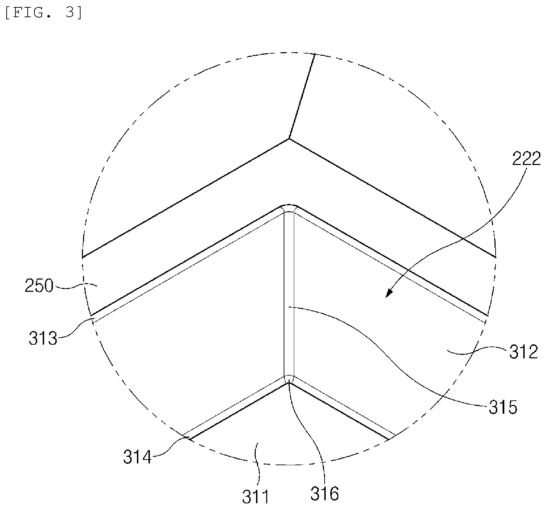

Referring to FIG. 3, the cup portions 222 and 232 may include a bottom surface 311 and a circumferential surface 312. The circumferential surface 312 may connect the bottom surface 311 and the terrace portion 250. A plurality of circumferential surfaces, more specifically, four circumferential surfaces may be included.

The bottom surface 311 may cover one surface of the electrode assembly 260, and the circumferential surface 312 may surround a perimeter of the electrode assembly 260. Also, the cup portions 222 and 232 may include a first edge 313 where the circumferential surface 312 and the terrace portion 250 meet, a second edge 314 where the bottom surface 311 and the circumferential surface 312 meet, and a third edge 315 where a pair of the adjacent circumferential surfaces 312 among a plurality of circumferential surfaces 312 meet. Each of the edges 313, 314, and 315 may be formed round to have a predetermined radius of curvature.

Also, the cup portions 222 and 232 may include a corner 316 where the pair of the adjacent circumferential surfaces 312 among the plurality of circumferential surfaces 312 and the bottom surface 311 meet. That is, the corner 316 may be a portion where a pair of the adjacent second edges 314 and the third edge 315 overlap. The corner 316 may have a predetermined radius of curvature.

Since the cup portions 222 and 232 have four circumferential surfaces 312, four of each of the edges 313, 314, and 315 and four corners 316 may be formed.

According to an embodiment of the present invention, the pouch type battery case 210 may have a barrier residual rate (BRR) expressed by Equation 3 below of 30% to 60%, preferably 30% to 50%, and more preferably 30% to 45%.

[Equation 3]

Barrier Residual Rate (BRR) = (LT/CT) × 100

In Equation 1, LT is a value of the thickness ($\mu$m) of the gas barrier layer included in the corner of the cup portion in the pouch type battery case, and CT is a value of the thickness ($\mu$m) of the gas barrier layer included in the terrace portion in the pouch type battery case. Preferably, CT may be a value of the thickness ($\mu$m) of the gas barrier layer included in the pouch film laminate before the preparation of the pouch type battery case.

The barrier residual rate may be a ratio of the thickness of the gas barrier layer at a cross section of the corner in the cup portion of the pouch type battery case to the thickness of the gas barrier layer included in the pouch film laminate before the preparation of the pouch type battery case, and is an indicator that may indicate robustness of the pouch type battery case. For example, since the pouch type battery case is prepared by drawing the pouch film laminate, a formed portion undergoes stretching, and particularly, since the corner is a portion where stretching stress is concentrated and most stretching occurs, it is formed thinner than other portions and is vulnerable to external impact. Thus, in a case in which the barrier residual rate is low, since mechanical strength of the battery case may be decreased and there is a problem in that the battery case may be easily fractured by impact, the robustness of the pouch type battery case may be represented through the BRR expressed by Equation 3. In a case in which the above range is satisfied, an excellent maximum forming depth may be achieved while excellent mechanical strength may be achieved, and it may be desirable in that energy density may be excellent because a volume of the accommodation portion 224 is not excessively reduced.

According to an embodiment of the present invention, a thickness of the gas barrier layer 120 at the corner 316 portion may be 25 $\mu$m or more, may preferably be 25 $\mu$m or more, 26 $\mu$m or more, 27 $\mu$m or more, 28 $\mu$m or more, 29 $\mu$m or more, or 30 $\mu$m or more, and 48 $\mu$m or less, 47 $\mu$m or less, 46 $\mu$m or less, 45 $\mu$m or less, 43 $\mu$m or less, 42 $\mu$m or less, or 41 $\mu$m or less, and may more preferably be in a range of 30 $\mu$m to 41 $\mu$m. Since the corner 316 is a portion where the stretching stress is concentrated during the forming of the cup portion and the most stretching occurs, it is formed thinner than other portions and is most vulnerable to the external impact because most cracks or pinholes occur. Particularly, since pressure is applied by two punches at a close distance during 2-cup forming, stress concentrated at the corner is further increased, and thus, this problem tends to intensify. Therefore, in a case in which the above range is satisfied, the occurrence of the cracks may be suppressed and damage due to the external impact may be minimized.

Since the terrace portion 250 is a region where the forming is not performed, the thickness of the gas barrier layer 120 in this portion is almost the same as the thickness of the gas barrier layer 120 of the pouch film laminate 100 before the forming. Thus, the thickness of the gas barrier layer 120 in the terrace portion 250 may be in a range of 70 $\mu$m to 90 $\mu$m, preferably 75 $\mu$m to 85 $\mu$m, and more preferably 78 $\mu$m to 82 $\mu$m.

A radius of curvature of the corner 316 may be formed to be in a range of 0.5 mm to 5.0 mm, preferably 1.0 mm to 4.0 mm, and more preferably 2.0 mm to 3.5 mm. The radius of curvature of the corner 316 may be a radius of curvature of an inner surface of the corner 316. If the radius of curvature of the corner 316 is excessively small, it is difficult to maintain the thickness of the gas barrier layer 120 at the corner at 30 $\mu$m or more, and if the radius of curvature is excessively large, since the accommodation space of the cup portion may be reduced, the energy density may be reduced.

**(2) Electrode Assembly**

The electrode assembly 260 may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260. The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 2, the electrode tabs 270 may protrude in different directions of the electrode assembly 260, respectively, but are not limited thereto and may be formed to protrude in various directions, for example, the electrode tabs protrude side by side from one side of the electrode assembly in the same direction.

## (3) Electrode Lead

The electrode lead 280 may supply electricity to the outside of the secondary battery 200. The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250. Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 271 and extends in a protruding direction of the negative electrode tab 271. The other ends of both of the positive electrode lead 282 and the negative electrode lead 284 may protrude to the outside of the battery case 210. Accordingly, the electricity generated inside the electrode assembly 260 may be supplied to the outside. Also, since the positive electrode tab 272 and the negative electrode tab 271 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

## (4) Insulating Portion

The insulating portion 290 prevents flow of the electricity generated from the electrode assembly 260 to the battery case 210 through the electrode lead 280, and may maintain sealing of the battery case 210. For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

## (5) Electrolyte

The pouch type secondary battery 200 according to the present invention may further include an electrolyte (not shown) that is injected into the pouch type battery case 210. The electrolyte is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

## Examples and Comparative Examples

### Example 1: Preparation of Pouch Film Laminate

A urethane adhesive was applied between a 25 $\mu$m thick polyethylene terephthalate (PET) film and a 25 $\mu$m thick nylon (Ny) film to form a 3 $\mu$m thick first adhesive layer, and thermal lamination was performed. Then, after a urethane adhesive was applied to a surface of the nylon film to form a 3 $\mu$m thick second adhesive layer, an 80 $\mu$m thick aluminum alloy thin film was disposed on the second adhesive layer and attached by thermal lamination. Next, an 80 $\mu$m thick sealant layer was prepared on a surface of the gas barrier layer, and then sequentially laminated to prepare a pouch film laminate having a tensile strength of 260 N/15 mm and an elongation of 98% as Example 1.

In this case, in the sealant layer, a 40 $\mu$m thick acid modified polypropylene (PPa) film, as a first sealant layer, and a 40 um thick ethylene-propylene random copolymer film, as a third sealant layer, were sequentially laminated based on a layer close to the aluminum alloy thin film.

The tensile strength and elongation were measured using a UTM, and specifically, after a sample was prepared by cutting the pouch film laminate to have a length (MD) x width (TD) of 120 mm x 15 mm, the sample was cut such that a longitudinal direction of the sample matched the MD of the pouch film laminate, fixed to the UTM with a grip gap of 50 mm, and then pulled at a tensile speed of 5 mm/min to measure strength at which fracture occurred as the tensile strength (N/15 mm), and in this case, the elongation was measured by measuring a deformation length when the fracture occurred.

### Examples 2 to 5 and Comparative Examples 1 to 6: Preparation of Pouch Film Laminates

As shown in Table 1 below, pouch film laminates were prepared in the same manner as in Example 1 except that tensile strength and elongation of the pouch film laminate were controlled by controlling the thickness of each layer or controlling mechanical properties of the gas barrier layer.

In this case, a cast polypropylene (CPP) film was used as the second sealant layer.

The pouch film laminates are summarized and listed in Tables 1 and 2 below.

[Table 1]

| | Thickness of each layer in the base material layer ($\mu$m) | | | | Thickness of the gas barrier layer ($\mu$m) | Thickness of each layer in the sealant layer ($\mu$m) | | |
|---|---|---|---|---|---|---|---|---|
| | Surface protection layer | First adhesive layer | Drawing assistance layer | Second adhesive layer | | First sealant layer | Second sealant layer | Third sealant layer |
| Example 1 | 25 | 3 | 25 | 3 | 80 | 40 | 0 | 40 |
| Example 2 | 25 | 3 | 25 | 3 | 80 | 40 | 0 | 40 |
| Example 3 | 25 | 3 | 25 | 3 | 80 | 30 | 30 | 20 |
| Example 4 | 25 | 3 | 25 | 3 | 80 | 30 | 30 | 20 |
| Example 5 | 40 | 3 | 25 | 3 | 80 | 40 | 0 | 40 |
| Comparative Example 1 | 12 | 3 | 25 | 3 | 60 | 30 | 30 | 20 |
| Comparative Example 2 | 12 | 3 | 25 | 3 | 60 | 30 | 0 | 50 |
| Comparative Example 3 | 12 | 3 | 25 | 3 | 60 | 30 | 30 | 20 |
| Comparative Example 4 | 12 | 3 | 25 | 3 | 80 | 40 | 0 | 40 |
| Comparative Example 5 | 12 | 3 | 25 | 3 | 80 | 30 | 0 | 50 |

(continued)

| | Thickness of each layer in the base material layer (µm) | | | | Thickness of the gas barrier layer (µm) | Thickness of each layer in the sealant layer (µm) | | |
|---|---|---|---|---|---|---|---|---|
| | Surface protection layer | First adhesive layer | Drawing assistance layer | Second adhesive layer | | First sealant layer | Second sealant layer | Third sealant layer |
| Comparative Example 6 | 12 | 3 | 25 | 3 | 80 | 30 | 0 | 50 |

[Table 2]

| | Thickness of the surface protection layer (µm) | Thickness of the drawing assistance layer (µm) | Pouch film laminate | | | MFI$_A$ | MFI$_B$ |
|---|---|---|---|---|---|---|---|
| | | | Thickness (µm) | Tensile strength (N/15mm) | Elongation (%) | | |
| Example 1 | 25 | 25 | 216 | 260 | 98 | 30.1 | 60.2 |
| Example 2 | 25 | 25 | 216 | 261 | 88 | 30.2 | 60.4 |
| Example 3 | 25 | 25 | 216 | 247 | 76 | 28.6 | 57.2 |
| Example 4 | 25 | 25 | 216 | 287 | 76 | 33.2 | 66.4 |
| Example 5 | 40 | 25 | 231 | 300 | 85 | 51.9 | 84.42 |
| Comparative Example 1 | 12 | 25 | 183 | 196 | 81 | 12.9 | 39.6 |
| Comparative Example 2 | 12 | 25 | 183 | 217 | 73 | 14.2 | 43.9 |
| Comparative Example 3 | 12 | 25 | 183 | 185 | 72 | 12.1 | 37.4 |
| Comparative Example 4 | 12 | 25 | 203 | 219 | 89 | 12.9 | 39.9 |
| Comparative Example 5 | 12 | 25 | 203 | 230 | 64 | 13.6 | 41.9 |
| Comparative Example 6 | 12 | 25 | 203 | 231 | 70 | 13.7 | 42.1 |

**Experimental Example 1: Evaluation of Formability of the Pouch Film Laminate**

Formability of each of the pouch film laminates according to Examples 1 to 5 and Comparative Examples 1 to 6 was evaluated.

Specifically, as a method of evaluating the formability of the pouch film laminate, after each of the pouch film laminates was cut to the same size of 665 mm (MD) x 400 mm (TD), a forming depth when cracks occurred was found while changing the forming depth in a 2-cup forming device equipped with a die and a punch, it was then confirmed that there were no defects when forming 10 times after the depth was decreased by 0.5 mm from the above forming depth, and the depth was measured as a maximum forming depth (Max forming depth).

In this case, die conditions of the 2-cup forming device are as shown in Table 3 below.

[Table 3]

| | Punch (corner) | 0.5(3.5) |
|---|---|---|
| Radius of curvature of the edge (mm) | Die | 0.5 |
| | Bridge | 0.5 |

(continued)

| Radius of curvature of the corner (mm) | Punch | 1.5 |
| --- | --- | --- |
| | Die | 2.5 |
| Clearance (mm) | Toward bridge | 1 |
| | Toward Side | 1 |
| Bridge (mm) | Width | 1 |
| Size (mm) | Punch | 513×95. 65×2 |
| | Die | 515×97. 65×2 |

The measured maximum forming depth (Max forming depth) was listed in Table 4 below.

**Experimental Example 2: Evaluation of Robustness of the Pouch Film Laminate**

In the pouch type battery case prepared when the formability of the pouch film laminate was evaluated, robustness of each of the pouch film laminates according to Examples 1 to 5 and Comparative Examples 1 to 4 when satisfying the maximum forming depth was evaluated.

Specifically, after forming a cup portion of the pouch film laminate, the robustness of each of the pouch film laminates according to Examples 1 to 5 and Comparative Examples 1 to 4 was evaluated by measuring a thickness of the gas barrier layer at a corner of the cup portion.

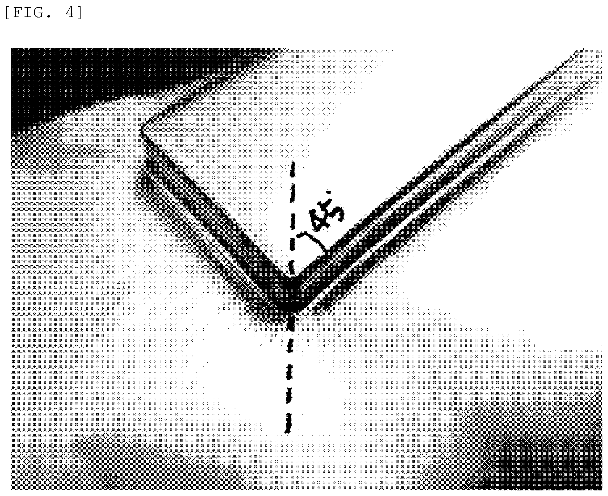

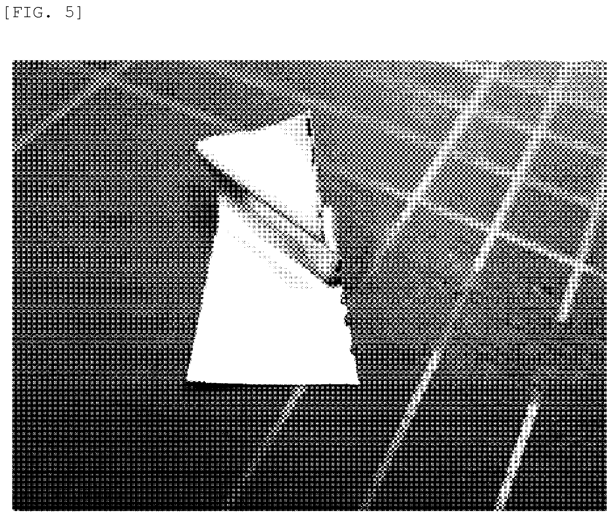

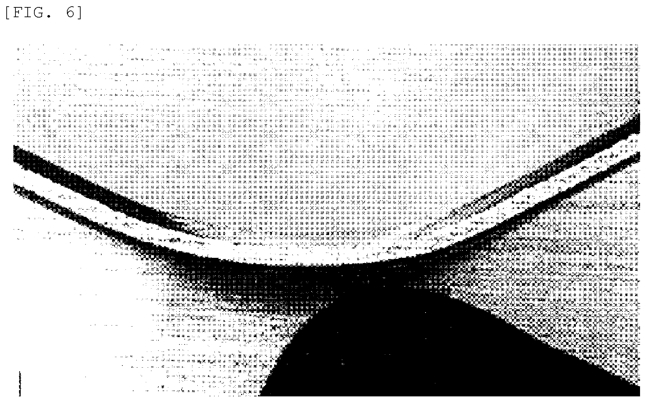

More specifically, in the pouch type battery case prepared when the formability of the pouch film laminate was evaluated, after a sample was prepared by cutting the corner at 45 degrees as illustrated in FIGS. 4 to 6 when the maximum forming depth was satisfied, a cut cross section of the sample was observed under a microscope to measure a thickness of the gas barrier layer at the corner where a bottom surface and a circumferential surface of the cup portion met, and a ratio of the thickness of the gas barrier layer at the corner portion after the forming of the cup portion to a thickness of the gas barrier layer before the forming was measured as a percentage.

This was expressed as the barrier residual rate (BRR) expressed in Equation 3 below and presented in Table 4 below.

$$[\text{Equation 3}]$$

$$\text{Barrier Residual Rate (BRR)} = (\text{LT/CT}) \times 100$$

In Equation 1, LT is a value of the thickness ($\mu$m) of the gas barrier layer included in the corner of the cup portion in the pouch type battery case, and CT is a value of the thickness ($\mu$m) of the gas barrier layer included in the pouch film laminate before the preparation of the pouch type battery case.

[Table 4]

| | $MFI_A$ | $MFI_B$ | Max forming depth (mm) | Thickness of the gas barrier layer at the corner of the cup portion ($\mu$m) | Barrier residual rate (%) |
| --- | --- | --- | --- | --- | --- |
| Example 1 | 30.1 | 60.2 | 12.5 | 43 | 53 |
| Example 2 | 30.2 | 60.4 | 14.5 | 43 | 53 |
| Example 3 | 28.6 | 57.2 | 12 | 42 | 52 |
| Example 4 | 33.2 | 66.4 | 14.5 | 41 | 51 |
| Example 5 | 51.9 | 84.42 | 12.5 | 46 | 57 |
| Comparative Example 1 | 12.9 | 39.6 | 9.5 | 36 | 60 |
| Comparative Example 2 | 14.2 | 43.9 | 10 | 36 | 60 |
| Comparative Example 3 | 12.1 | 37.4 | 8.5 | 36 | 60 |
| Comparative | 12.9 | 39.9 | 9.5 | 49 | 61 |

(continued)

|  | MFI$_A$ | MFI$_B$ | Max forming depth (mm) | Thickness of the gas barrier layer at the corner of the cup portion ($\mu$m) | Barrier residual rate (%) |
|---|---|---|---|---|---|
| Example 4 |  |  |  |  |  |
| Comparative Example 5 | 13.6 | 41.9 | 10 | - | - |
| Comparative Example 6 | 13.7 | 42.1 | 10 | - | - |

As described in Table 4 above, with respect to Examples 1 to 5, unlike Comparative Examples 1 to 6, it may be confirmed that the maximum forming depth and robustness were excellent by satisfying the Max Forming Index A (MFI$_A$) range according to the present invention.

[Description of the Symbols]

100: Pouch Film Laminate
110: Base Material Layer
112: Surface Protection Layer
114: Drawing Assistance Layer
120: Gas Barrier Layer
130: Sealant Layer
200: Pouch Type Secondary Battery
210: Pouch Type Battery Case
220: First Case
222: Cup Portion
224: Accommodation Portion
230: Second Case
232: Cup Portion
240: Bridge Portion
250: Sealing Portion
260: Electrode Assembly
270: Electrode Tab
271: Negative Electrode Tab
272: Positive Electrode Tab
280: Electrode Lead
282: Positive Electrode Lead
284: Negative Electrode Lead
290: Insulating Portion

**Claims**

1.  A pouch film laminate comprising:

    a base material layer, a gas barrier layer, and a sealant layer which are sequentially laminated,
    wherein the base material layer comprises a surface protection layer, and
    the pouch film laminate has a Max Forming Index A (MFI$_A$) expressed by Equation 1 of 15 or more:

    [Equation 1]

    $$\text{Max Forming Index A (MFI}_A) = (PT/AT) \times TS$$

    wherein, in Equation 1, PT is a value of a thickness ($\mu$m) of the surface protection layer, AT is a value of a thickness ($\mu$m) of the pouch film laminate, and TS is a value of tensile strength (N/15 mm) of the pouch film laminate.

2. The pouch film laminate of claim 1, wherein the surface protection layer has the thickness of 10 $\mu$m to 35 $\mu$m.

3. The pouch film laminate of claim 1, wherein the base material layer further comprises a drawing assistance layer, and the drawing assistance layer has a thickness of 20 $\mu$m to 45 $\mu$m.

4. The pouch film laminate of claim 1, wherein the base material layer has a thickness of 45 $\mu$m to 70 $\mu$m.

5. The pouch film laminate of claim 1, wherein the gas barrier layer has a thickness of 70 $\mu$m to 90 $\mu$m.

6. The pouch film laminate of claim 1, wherein the sealant layer has a thickness of 70 $\mu$m to 90 $\mu$m.

7. The pouch film laminate of claim 1, wherein the sealant layer comprises a first sealant layer disposed to be in contact with the gas barrier layer, a second sealant layer laminated on the first sealant layer, and a third sealant layer laminated on the second sealant layer.

8. The pouch film laminate of claim 1, wherein the pouch film laminate has the thickness of 120 $\mu$m to 300 $\mu$m.

9. The pouch film laminate of claim 1, wherein the pouch film laminate has an elongation of 65% to 120%.

10. The pouch film laminate of claim 1, wherein the pouch film laminate has the tensile strength of 225 N/15 mm to 350 N/15 mm.

11. The pouch film laminate of claim 1, wherein the base material layer further comprises a drawing assistance layer, and

the pouch film laminate has a Max Forming Index B (MFI$_B$) expressed by Equation 2 of 45 or more:

[Equation 2]

$$\text{Max Forming Index (MFI}_A) = \{(PT+NT)/(AT)\} \times TS$$

wherein, in Equation 1, PT is the value of the thickness ($\mu$m) of the surface protection layer, NT is a value of a thickness ($\mu$m) of the drawing assistance layer, AT is the value of the thickness ($\mu$m) of the pouch film laminate, and TS is the value of the tensile strength (N/15 mm) of the pouch film laminate.

12. The pouch film laminate of claim 1, wherein a ratio of the thickness of the pouch film laminate to the thickness of the surface protection layer is in a range of 5 to 10.

13. The pouch film laminate of claim 1, wherein a ratio of a thickness of the gas barrier layer to the thickness of the surface protection layer is in a range of 2.5 to 3.3.

14. The pouch film laminate of claim 1, wherein a ratio of a thickness of the gas barrier layer to a thickness of the base material layer is in a range of 1.4 to 1.8.

15. The pouch film laminate of claim 1, wherein the base material layer further comprises a drawing assistance layer, and a ratio of a thickness of the drawing assistance layer to the thickness of the surface protection layer is 1.2 or less.

16. A pouch type battery case prepared by drawing the pouch film laminate of claim 1.

17. A pouch type secondary battery comprising the pouch type battery case of claim 16.

[FIG. 1]

<u>100</u>

[FIG. 2]

[FIG. 3]

[FIG. 4]

[FIG. 5]

[FIG. 6]

EP 4 765 375 A1

## INTERNATIONAL SEARCH REPORT

| | International application No. |
|---|---|
| | **PCT/KR2025/003530** |

**A. CLASSIFICATION OF SUBJECT MATTER**

**H01M 50/131**(2021.01)i; **H01M 50/126**(2021.01)i; **H01M 50/105**(2021.01)i; **H01M 50/133**(2021.01)i; **H01M 50/124**(2021.01)i; **H01M 50/121**(2021.01)i; **H01M 50/119**(2021.01)i; **H01M 50/136**(2021.01)i; **H01M 50/145**(2021.01)i

According to International Patent Classification (IPC) or to both national classification and IPC

**B. FIELDS SEARCHED**

Minimum documentation searched (classification system followed by classification symbols)

H01M 50/131(2021.01); B32B 27/00(2006.01); B32B 27/18(2006.01); B32B 27/32(2006.01); H01M 2/02(2006.01); H01M 50/105(2021.01); H01M 50/124(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기재층(base layer), 가스 배리어층(gas barrier layer), 실런트층(sealant layer), 표면 보호층(surface protection layer), 최대 성형 지수(maximum forming index), 파우치 필름(pouch film)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0145964 A (LG ENERGY SOLUTION, LTD.) 18 October 2023 (2023-10-18) See paragraphs [0012]-[0052], claim 16 and figure 2. | 1-6,8-17 |
| Y | | 7 |
| Y | KR 10-2022-0166100 A (YOULCHON CHEMICAL CO., LTD.) 16 December 2022 (2022-12-16) See paragraph [0008] and figure 1. | 7 |
| A | KR 10-2023-0047904 A (LG ENERGY SOLUTION, LTD.) 10 April 2023 (2023-04-10) See claims 1-14 and figures 1 and 3. | 1-17 |
| A | JP 2017-022132 A (DAINIPPON PRINTING CO., LTD.) 26 January 2017 (2017-01-26) See claim 1 and figure 1. | 1-17 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 June 2025** | **18 June 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

26

**INTERNATIONAL SEARCH REPORT**

| International application No. |
| --- |
| **PCT/KR2025/003530** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-069218 A (YUKA DENSHI CO., LTD.) 06 April 2017 (2017-04-06)<br>See claim 1 and figures 1 and 3. | 1-17 |

Form PCT/ISA/210 (second sheet) (July 2022)

# EP 4 765 375 A1

| | | | |
|---|---|---|---|
| **INTERNATIONAL SEARCH REPORT**<br>Information on patent family members | | International application No.<br>**PCT/KR2025/003530** | |

| Patent document<br>cited in search report | | | Publication date<br>(day/month/year) | Patent family member(s) | | | Publication date<br>(day/month/year) |
|---|---|---|---|---|---|---|---|
| KR | 10-2023-0145964 | A | 18 October 2023 | CN | 113782878 | A | 10 December 2021 |
| | | | | CN | 215955369 | U | 04 March 2022 |
| | | | | EP | 4135105 | A1 | 15 February 2023 |
| | | | | EP | 4135105 | A4 | 11 December 2024 |
| | | | | JP | 2023-526609 | A | 22 June 2023 |
| | | | | JP | 2024-026624 | A | 28 February 2024 |
| | | | | JP | 7416979 | B2 | 17 January 2024 |
| | | | | KR | 10-2021-0152969 | A | 16 December 2021 |
| | | | | KR | 10-2611432 | B1 | 08 December 2023 |
| | | | | US | 2023-0207931 | A1 | 29 June 2023 |
| | | | | WO | 2021-251736 | A1 | 16 December 2021 |
| KR | 10-2022-0166100 | A | 16 December 2022 | | None | | |
| KR | 10-2023-0047904 | A | 10 April 2023 | CA | 3221913 | A1 | 06 April 2023 |
| | | | | CN | 117426004 | A | 19 January 2024 |
| | | | | EP | 4343932 | A1 | 27 March 2024 |
| | | | | EP | 4343932 | A4 | 23 April 2025 |
| | | | | JP | 2024-517488 | A | 22 April 2024 |
| | | | | JP | 7662837 | B2 | 15 April 2025 |
| | | | | KR | 10-2660400 | B1 | 25 April 2024 |
| | | | | US | 2024-0266645 | A1 | 08 August 2024 |
| | | | | WO | 2023-055069 | A1 | 06 April 2023 |
| JP | 2017-022132 | A | 26 January 2017 | JP | 6264419 | B2 | 24 January 2018 |
| JP | 2017-069218 | A | 06 April 2017 | | None | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240037462
- KR 1020240037463
- KR 1020240196382
- KR 1020250034242